(19) Europäisches Patentamt
European Patent Office
Office européen des brevets

(11) EP 2 246 664 B1

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(21) Anmeldenummer: **10003856.1**

(22) Anmeldetag: **10.04.2010**

(51) Int Cl.:
*G01C 21/16* (2006.01)    *G01C 21/28* (2006.01)
*G06T 7/00* (2006.01)    *G06K 9/00* (2006.01)
*B60W 40/11* (2012.01)    *B60W 40/112* (2012.01)
*B60W 40/114* (2012.01)

(54) **Verfahren zur automatischen Bestimmung wenigstens einer die Änderung der Lage eines Kraftfahrzeugs beschreibenden Zielgrösse**

Method for automatic determination of at least one target factor describing changes in the position of a motor vehicle

Procédé de détermination automatique d'au moins une grandeur cible décrivant la modification de la position d'un véhicule automobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.04.2009 DE 102009019399**

(43) Veröffentlichungstag der Anmeldung:
**03.11.2010 Patentblatt 2010/44**

(73) Patentinhaber: **Audi AG**
**85045 Ingolstadt (DE)**

(72) Erfinder:
• **Heinemann, Patrick**
**85092 Kösching (DE)**
• **Giesler, Björn**
**85055 Ingolstadt (DE)**
• **Roehder, Martin**
**85049 Ingolstadt (DE)**
• **Braun, Julian**
**80809 München (DE)**

(74) Vertreter: **Thielmann, Frank**
**AUDI AG**
**Abteilung I/ET-3**
**85045 Ingolstadt (DE)**

(56) Entgegenhaltungen:
**WO-A2-2006/002322    DE-A1-102004 057 947
US-A1- 2004 179 104**

• **EDWARD ROSTEN ET AL: "Machine Learning for High-Speed Corner Detection" 1. Januar 2006 (2006-01-01), COMPUTER VISION - ECCV 2006 LECTURE NOTES IN COMPUTER SCIENCE;; LNCS, SPRINGER, BERLIN, DE, PAGE(S) 430 - 443 , XP019036410 ISBN: 978-3-540-33832-1 * das ganze Dokument ***

**Beschreibung**

Die Erfindung betrifft ein Verfahren zur automatischen Bestimmung wenigstens einer die Änderung der Lage eines Kraftfahrzeugs beschreibenden Zielgröße, insbesondere der Änderung des Nickwinkels und/oder des Rollwinkels und/oder des Gierwinkels.

Für eine zunehmende Zahl von Anwendungen im Kraftfahrzeug benötigt man heutzutage auch eine Information über die aktuelle Lage, also Orientierung, des Kraftfahrzeugs. Als Beispiel seien heutige Fahrerassistenzsysteme genannt, die eine Vielzahl umfelderfassender Sensoren umfassen. Diese Sensoren liefern Informationen über das Fahrzeugumfeld in Relation zur Verbaulage im Kraftfahrzeug. Da jedoch die Lage des Kraftfahrzeugs zum Umfeld nicht fest ist, entsteht bei der Lokalisation von Umfelddaten ein Fehler in Abhängigkeit von der Fahrzeugeigenbewegung.

Um Informationen zur Lage des Kraftfahrzeugs zu sammeln, ist es beispielsweise bekannt, Daten aus dem Fahrwerk abzufragen oder eine im Kraftfahrzeug verbaute Inertialnavigationsplattform mit mehreren Beschleunigungs- und/oder Drehratensensoren zu verwenden. Allerdings sind die je nach Fahrwerk verfügbaren Informationen über die Fahrzeuglage aus dem Fahrwerk sehr ungenau und beispielsweise für eine präzise Umfelderfassung nicht geeignet. Bei Verwendung einer Inertialnavigationsplattform werden meist stark driftende Lagewinkel ermittelt, zudem ist diese Technologie sehr teuer.

Die Ermittlung der Lage eines Fahrzeugs aus den Aufnahmen einer Bildaufnahmeeinrichtung ist beispielsweie aus den Druckschriften WO 2006/002322, US 2004/0179104 und DE 10 2004 057 947 bekannt.

Der Erfindung liegt die Aufgabe zugrunde, ein Verfahren zur Bestimmung der Lageänderung eines Kraftfahrzeugs anzugeben, welches eine möglichst genaue und schnelle Ermittlung erlaubt, baulich nicht aufwändig und einfach zu realisieren ist.

Diese Aufgabe wird erfindungsgemäß durch das in Anspruch 1 definierte Verfahren gelöst.

Hierbei ist vorgesehen, dass die Zielgröße aus einer aus wenigstens zwei zeitlich aufeinander folgenden, von einer in einer festen Lagebeziehung mit dem Kraftfahrzeug stehenden Bildaufnahmeeinrichtung, insbesondere einer Monokamera, aufgenommenen Bildern ermittelten perspektivischen Verschiebung markanter Orientierungspunkte ermittelt wird.

Es wird also vorgeschlagen, zur Ermittlung der Zielgrößen als Eingabe lediglich wenigstens zwei zeitlich aufeinander folgende Bilder einer Bildaufnahmeeinrichtung, beispielsweise einer Kamera, zu verwenden, also ein zu einem ersten Zeitpunkt aufgenommenes erstes Bild und ein zu einem zweiten Zeitpunkt aufgenommenes zweites Bild. Insbesondere können zeitlich unmittelbar aufeinander folgende Bilder verwendet werden. Diese Bilder decken folglich ein Zeitintervall ab, nämlich die Differenz zwischen dem ersten und dem zweiten Zeitpunkt, und aus ihnen kann mittels des erfindungsgemäßen Verfahrens die Lageänderung des Kraftfahrzeugs qualitativ und quantitativ erfasst werden. Hierzu ist zunächst vorgesehen, markante Orientierungspunkte zu ermitteln, beispielsweise Ecken oder dergleichen. Die Orientierungspunkte zeichnen sich dadurch aus, dass sie, im ersten Bild bestimmt, aufgrund ihrer Umgebung auch im zweiten Bild wieder aufgefunden werden können. Die zu den Orientierungspunkten im zweiten Bild korrespondierenden Orientierungspunkte nennt man häufig auch Korrespondenzpunkte. Es ergibt sich folglich ein Bewegungsfeld (die perspektivische Verschiebung), das eine Regel beschreibt, wie sich die Position der Orientierungspunkte vom ersten Bild zum zweiten Bild verändert. Um eine verlässliche Aussage zu erhalten, können beispielsweise 1.000 bis 2.000 Orientierungspunkte bestimmt werden.

Die perspektivische Verschiebung steht mithin in einem konkreten Zusammenhang zur Veränderung der Lage der Bildaufnahmeeinrichtung zwischen der Aufnahme der beiden Bilder. Da die Bildaufnahmeeinrichtung in einer festen Lagebeziehung zu dem Kraftfahrzeug steht, kann die ermittelte perspektivische Verschiebung mithin ausgewertet werden, um die Lageänderung des Kraftfahrzeugs beschreibende Zielgrößen zu ermitteln.

Als Bildaufnahmeeinrichtung kann insbesondere eine ohnehin schon am Kraftfahrzeug vorgesehene Bildaufnahmeeinrichtung, beispielsweise eine Umfeldkamera eines Fahrerassistenzsystems, verwendet werden. Da Möglichkeiten, solche Orientierungspunkte zu ermitteln, bekannt sind, worauf im Folgenden noch näher eingegangen werden wird, ist beim erfindungsgemäßen Verfahren mithin kein a priori-Wissen notwendig, abgesehen gegebenenfalls von der intrinsischen Kalibrierung der Bildaufnahmeeinrichtung, so dass das erfindungsgemäße Verfahren vorteilhaft in jedem mit einer Bildaufnahmeeinrichtung ausgestatteten Kraftfahrzeug einfach realisiert werden kann. Zudem führt es zu einer Verbesserung der Genauigkeit, die zu mehr Qualität und Sicherheit von Fahrzeugfunktionen führt. Gegebenenfalls können hierdurch auch Spezialsensoren entfallen. Insbesondere kann mit dem erfindungsgemäßen Verfahren eine hohe Winkelauflösung bei häufiger Messung erreicht werden, so dass besonders vorteilhaft als Zielgrößen die Änderung des Nickwinkels und/oder des Rollwinkels und/oder des Gierwinkels ermittelt werden können.

Es sei an dieser Stelle noch angemerkt, dass die Anordnung bzw. Position der Bildaufnahmeeinrichtung im Kraftfahrzeug vollkommen beliebig gewählt werden kann, da letztlich ja Änderungen bestimmt werden, die in alle Richtungen ersichtlich sind.

Wie bereits erwähnt, sind Algorithmen zur Durchführung der einzelnen Schritte des erfindungsgemäßen Verfahrens grundsätzlich im Stand der Technik bekannt. So kann beispielsweise vorgesehen sein, dass die Orientierungspunkte in dem ersten Bild über einen SIFT-Algorithmus (Scale-Invariant Feature Transform) und/oder einen Eckendetektionsalgorithmus, insbesondere einen Harris-Ecken-Detektionsalgorithmus und/oder einen FAST-Algorithmus (Features from Accelerated Segment Test), ermittelt werden. Während die ersten beiden genannten Möglichkeiten bereits recht lange bekannt sind, ist der schnell arbeitende und für das erfindungsgemäße Verfahren besonders gut geeignete FAST-Algorithmus recht neu. Diesbezüglich sei für weitere Informationen beispielsweise auf den Artikel von Edward Rosten and Tom Drummond, "Machine learning for high-speed corner detection", European Conference on Computer Vision 2006, 430-443, verwiesen. Bestimmt werden durch all diese Algorithmen letztlich Merkmale des Bildes, durch die ausgezeichnete Orientierungspunkte mittels ihrer Umgebung gekennzeichnet sind.

Um die Korrespondenzpunkte zu den im ersten Bild bestimmten Orientierungspunkten in dem zweiten Bild zu ermitteln, können beispielsweise die Lukas-Kanade-Methode und/oder die Horn-Schunck-Methode und/oder der SIFT-Algorithmus, der für die Ermittlung der Orientierungspunkte wie auch der Korrespondenzpunkte verwendet werden kann, verwendet werden. Auch diese verschiedenen Algorithmen sind inzwischen weithin bekannt, so dass die Orientierungspunkte im zweiten Bild wiedergefunden werden können und somit das Bewegungsfeld ermittelt ist.

Erfindungsgemäß ist vorgesehen, dass aus der perspektivischen Verschiebung eine die Rotation der Bildaufnahmeeinrichtung zwischen der Aufnahme der beiden Bilder beschreibende Rotationsmatrix und daraus die Zielgröße ermittelt werden. Eine solche Rotationsmatrix gibt folglich an, welche Stellung die Bildaufnahmeeinrichtung bei der Aufnahme des zweiten Bildes relativ zu ihrer Lage bei der Aufnahme des ersten Bildes inne hat. Konkret kann dabei vorgesehen sein, dass zur Ermittlung der Rotationsmatrix

- eine die perspektivische Verschiebung beschreibende Fundamentalmatrix, insbesondere mittels eines Acht-Punkte-Algorithmus, ermittelt wird,
- unter Berücksichtigung der als Eingangsgrößen zur Verfügung gestellten, die Abbildungseigenschaften der Bildaufnahmeeinrichtung beschreibenden intrinsischen Kalibrierung eine essentielle Matrix ermittelt wird,
- durch Singulärwertzerlegung aus der essentiellen Matrix vier mögliche, eine mögliche Rotation der Bildaufnahmeeinrichtung zwischen der Aufnahme der beiden Bilder umfassende Kameramatrizen bestimmt werden,
- zur Ermittlung der korrekten Kameramatrix für wenigstens einen Orientierungspunkt, insbesondere mehrere Orientierungspunkte, die 3D-Rekonstruktion ermittelt und überprüft wird, ob der rekonstruierte Punkt vor der Bildaufnahmeeinrichtung liegt,
- aus der korrekten Kameramatrix die Rotationsmatrix ermittelt wird.

Zunächst wird also die Fundamentalmatrix bzw. eine optimale Fundamentalmatrix ermittelt. Die Fundamentalmatrix ist durch sieben unbekannte Variablen gekennzeichnet, so dass grundsätzlich sieben Punkte ausreichend sind, um ein lineares Gleichungssystem zu erstellen; denn die Fundamentalmatrix ergibt sich, wenn mit $p_i$ ein Orientierungspunkt bezeichnet wird, mit $q_i$ der zugehörige Korrespondenzpunkt, durch die sie definierende Gleichung

$$p_i \, F \, q_i = 0,$$

wobei F die Fundamentalmatrix bezeichnet. Dabei wird hier in homogenen Koordinaten gerechnet. Bekannt zur Ermittlung der Fundamentalmatrix ist insbesondere der Acht-Punkte-Algorithmus, der einen weiteren Punkt hinzunimmt, mithin das Gleichungssystem überbestimmt, um sogleich eine erste Überprüfung zu ermöglichen. Die Fundamentalmatrix beschreibt mithin die Geometrie, also eine Abbildung, zwischen dem ersten Bild und dem zweiten Bild.

Es sei an dieser Stelle angemerkt, dass im erfindungsgemäßen Verfahren vorteilhaft auch die Existenz von sich relativ zur statischen Umgebung bewegenden Orientierungspunkten in den Bildern berücksichtigt werden kann. Dabei wird letztlich davon ausgegangen, dass die Mehrzahl der zur Bestimmung der Fundamentalmatrix verwendeten Orientierungspunkte statisch sind, so dass eine optimale Fundamentalmatrix gefunden werden kann, die sich auf diese statischen Punkte bezieht. Hierzu ist erfindungsgemäß vorgesehen, dass insbesondere unter Anwendung eines RANSAC-Algorithmus mehrere Fundamentalmatrizen aus verschiedenen Untermengen der Orientierungspunkte ermittelt werden und eine optimale Fundamentalmatrix durch Überprüfung jeder Fundamentalmatrix an anderen Orientierungspunkten ermittelt wird. Der RANSAC-Algorithmus ist letztlich ein Monte-Carlo-Verfahren, das Stichproben auswählt, aus denen Fundamentalmatrizen ermittelt werden. Beispielsweise können bei 1.000 bis 2.000 Orientierungspunkten etwa im Bereich mehrerer 100 Stichproben vorgenommen werden. Diese so ermittelten Fundamentalmatrizen werden dann anhand anderer Orientierungspunkte überprüft, um mithin zu überprüfen, welche Fundamentalmatrix für die meisten Punkte die korrekte Abbildung auf die Korrespondenzpunkte wiedergibt.

Die Fundamentalmatrix F beschreibt den dreidimensionalen Raum der Bildaufnahmen nur bis auf eine Perspektivabbildung, da bisher die Kamerageometrie als Einheitsgeometrie angenommen wird, so dass, um eine Aussage über den dreidimensionalen Raum, in dem die Bildaufnahmeeinrichtung und das Kraftfahrzeug befindlich sind, treffen zu können, nun in einem nächsten Schritt dieser Ausgestaltung die essentielle Matrix ermittelt wird. Hierfür wird die intrinsische Kalibration der Bildaufnahmeeinrichtung benötigt, die die Abbildungseigenschaften der Bildaufnahmeeinrichtung beschreibt. Wird eine die Abbildungseigenschaften der Bildaufnahmeeinrichtung als intrinsische Kalibration beschreibende Matrix mit K bezeichnet, so gilt für die essentielle Matrix

$$E = K^T \ F \ K.$$

Die essentielle Matrix umfasst mithin nicht nur die Geometrie, sondern zusätzlich auch die Projektionseigenschaften der Bildaufnahmeeinrichtung, nachdem über die Matrix K, die ja die Projektion vom dreidimensionalen in den zweidimensionalen Raum der Bilder wiedergibt, mit eingebunden wurde. Allerdings enthält - aufgrund des Ausgehens von zweidimensionalen Daten - die essentielle Matrix letztlich vier mögliche Lösungen für eine Rotation der Kamera. Es werden daher im nächsten Schritt vier Kameramatrizen bestimmt, die im vierdimensionalen Raum neben den Projektionseigenschaften die Rotation und die Translation in einer gemeinsamen Matrix beschreiben (es werden homogene Koordinaten verwendet), von denen jeweils eine einer der Lösungen entspricht. Die Kameramatrix beschreibt also, wie ein in einem dreidimensionalen Koordinatensystem mit auf die Position der Bildaufnahmeeinrichtung bei der Aufnahme des ersten Bildes definiertem Ursprung definierter Punkt im zweidimensionalen Bild von der Position der Bildaufnahmeeinrichtung bei Aufnahme des zweiten Bildes abgebildet wird. Um nun die korrekte Kameramatrix auswählen zu können, wird ein Mehrpunktetest durchgeführt, das bedeutet, es wird die 3D-Rekonstruktion von mehreren Punkten bis auf eine Skalierung berechnet und überprüft, ob die Punkte tatsächlich vor der Bildaufnahmeeinrichtung liegen. Einige wenige Punkte, beispielsweise 6 bis 8 Punkte, sind hier ausreichend, um beispielsweise pathologische Orientierungspunkte auszuschließen.

Aus der korrekten Kameramatrix kann nun auf einfache Weise die Rotationsmatrix und daraus die Zielgröße(n), insbesondere die die Änderung der Orientierung angebenden Winkel, ermittelt werden.

Wie bereits erwähnt, ergeben sich eine Vielzahl von Anwendungsmöglichkeiten für mit dem erfindungsgemäßen Verfahren ermittelte Zielgrößen. Besonders vorteilhaft ist das erfindungsgemäße Verfahren jedoch bei der Anpassung von Anzeigen, die beispielsweise Informationen über vor dem Kraftfahrzeug gelegene Objekte wiedergeben, nützlich, die dann angepasst werden können. Besonders vorteilhaft lässt sich das erfindungsgemäße Verfahren im Rahmen der "Augmented Reality" einsetzen, bei der mittels eines Head-Up-Displays dem Fahrer zusätzliche Informationen auf die Frontscheibe des Kraftfahrzeugs projiziert werden, was kontaktanalog erfolgen soll. Dementsprechend nennt man solche Darstellungen auch kontaktanaloge Darstellungen. Damit können beispielsweise Objekte besonders hervorgehoben werden, indem sie überdeckend eine deutlichere Information angezeigt wird. Kontaktanaloge Darstellungen sind besonders empfindlich gegenüber Änderungen der Lage des Kraftfahrzeugs, so dass die schnell, einfach und genau ermittelbaren Zielgrößen des erfindungsgemäßen Verfahrens hier Verwendung finden können. Von besonderem Vorteil ist es dabei, wenn die in der Darstellung dargestellten Informationen wenigstens teilweise aus Bildern derselben Bildaufnahmeeinrichtung ermittelt werden, das heißt, dass der kontaktanalogen Darstellung dieselben Bilder zugrunde liegen wie der Bestimmung der Zielgrößen, so dass letztlich "am Bild" nachjustiert werden kann und die kontaktanaloge Darstellung stabilisiert und verbessert wird. Es wird also auch bestimmt, wie sich das Bild bewegt.

Selbstverständlich können die ermittelten Zielgrößen auch für andere Fahrzeugsysteme verwendet werden, beispielsweise zur Fahrwerksregelung und/oder zur Bildvorverarbeitung und/oder von einem Fahrerassistenzsystem. In der Bildvorverarbeitung kann das erfindungsgemäße Verfahren beispielsweise genutzt werden, um Bilder oder insbesondere einen Videostream sozusagen zu "entwackeln", indem die ihnen zugrunde liegende Bewegung mit betrachtet wird. Ein anderer vorteilhafter Anwendungsbereich sind auch Navigationssysteme, die unter Verwendung von Navigationssensoren in einem von einer oder der Bildaufnahmeeinrichtung aufgenommenen Bild Objekte detektieren sollen. Denn ein Radarsensor kann den Nickwinkel, unter denen sich ein Objekt befindet, nicht feststellen, so dass nicht genau bekannt ist, wo im Bild das Objekt zu finden sein dürfte. Hierbei kann als zusätzliche Information als Zielgröße beispielsweise die Änderung des Nickwinkels berücksichtigt werden.

Es sei angemerkt, dass das erfindungsgemäße Verfahren selbstverständlich auch mit anderen Möglichkeiten zur Ermittlung der Lage des Kraftfahrzeugs bzw. deren Änderung kombiniert werden kann, beispielsweise als ergänzendes Korrektiv, als Plausibilitätsprüfung und dergleichen.

Weitere Vorteile und Einzelheiten der vorliegenden Erfindung ergeben sich aus den im folgenden beschriebenen Ausführungsbeispielen sowie anhand der Zeichnungen. Dabei zeigen:

Fig. 1 einen Ablaufplan des erfindungsgemäßen Verfahrens,

Fig. 2 eine Illustration der Merkmalsverschiebung von Bild zu Bild, und

Fig. 3 eine schematische Darstellung eines Kraftfahrzeugs.

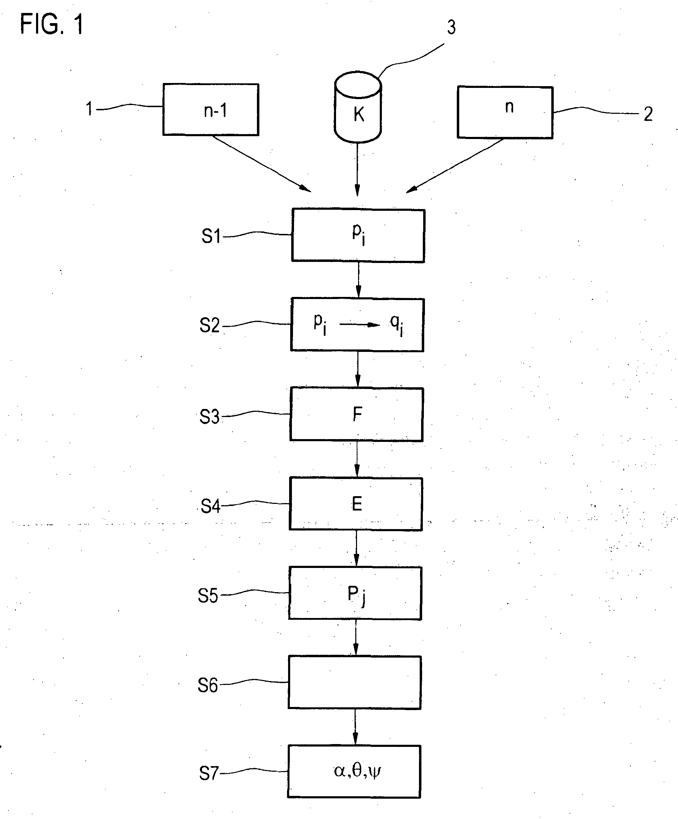

Fig. 1 zeigt einen Ablaufplan des erfindungsgemäßen Verfahrens. Dabei werden Bilder aus einem Bildstrom einer Monokamera bzw. monokularen Kamera genutzt, um die Änderung der Lage eines Kraftfahrzeugs zu ermitteln. Die Kamera ist dabei lagefest bezüglich dem Kraftfahrzeug angeordnet. Eingang in das Verfahren gemäß Fig. 1 finden zwei zeitlich unmittelbar aufeinander folgende Bilder 1 und 2, gekennzeichnet durch ihre Nummer n-1 und n, sowie die intrinsische Kalibrierung 3 der Kamera, hier mit K bezeichnet. Die intrinsische Kalibrierung der Kamera umfasst deren Abbildungseigenschaften, also beispielsweise die Auflösung, die Brennweite, Verzerrungen durch Linsen und dergleichen.

In einem Schritten S1 werden nun zunächst Orientierungspunkte $p_i$ im ersten Bild 1 ermittelt, die sich besonders auszeichnen, also beispielsweise Ecken sind, und sich aufgrund ihrer Umgebung voraussichtlich gut im zweiten Bild 2 wiederfinden lassen werden. Eine solche Extraktion von Merkmalen bzw. Merkmalen kennzeichnender Punkte kann beispielsweise über den SIFT-Algorithmus, eine Harris-Ecken-Detektion oder einen FAST-Algorithmus erfolgen.

In einem Schritt S2 werden dann die den Orientierungspunkten $p_i$ im Bild 2 zugeordneten Korrespondenzpunkte $q_i$ detektiert. Dies kann beispielsweise mit der Lukas-Kanade-Methode, der Horn-Schunck-Methode oder auch dem SIFT-Algorithmus geschehen. Wird zu einem Orientierungspunkt $p_i$ kein Korrespondenzpunkt $q_i$ gefunden, so wird der Orientierungspunkt verworfen.

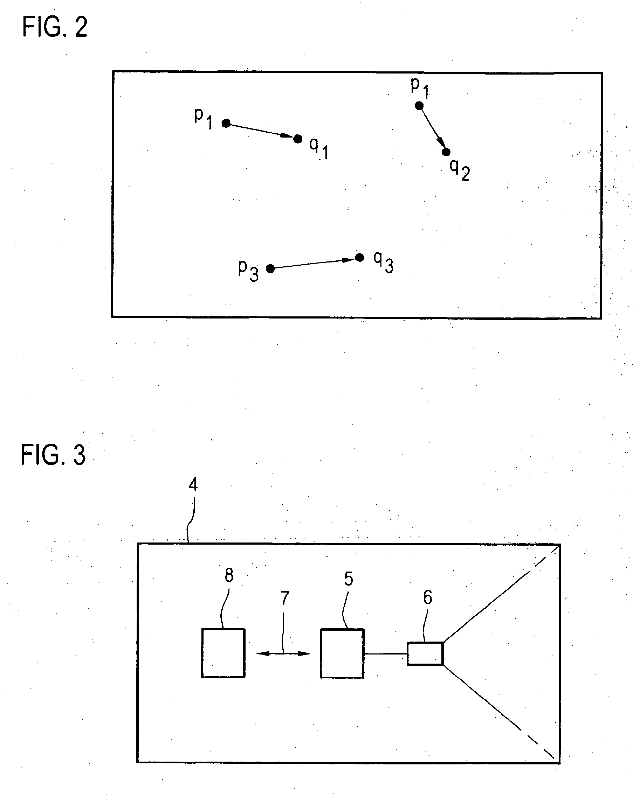

Auf diese Weise ist nun das Bewegungsfeld (und damit die perspektivische Verschiebung) bezüglich der Orientierungspunkte zwischen den Bildern 1 und 2 bekannt, was durch Fig. 2 näher dargestellt wird. In der zweidimensionalen Projektionsebene, also dem Bild, ist bekannt, wie sich jeder der Orientierungspunkte $p_i$ verschiebt, dargestellt hier anhand der Punktepaare $p_1$, $q_1$, $p_2$, $q_2$ und $p_3$, $q_3$.

Dieser optische Fluss wird gekennzeichnet durch die sogenannte Fundamentalmatrix F, die in einem Schritt S3 (vgl. wiederum Fig. 1) ermittelt wird.

Es soll nun eine optimale Fundamentalmatrix F so bestimmt werden, dass für möglichst viele Orientierungspunkte $p_i$ die Bedingung

$$p_i \, F \, q_i = 0$$

erfüllt ist. Dazu ist vorgesehen, mittels des Acht-Punkte-Algorithmus stichprobenartig mehrere Fundamentalmatrizen zu ermitteln, die dann anhand der anderen Orientierungspunkte überprüft werden. Diese statistische Auswahl kann beispielsweise durch einen RANSAC-Algorithmus getroffen werden. Als optimale Fundamentalmatrix F wird dann die Matrix F gewählt, für die möglichst viele Orientierungspunkte $p_i$ die obige Bedingung (wenigstens näherungsweise) erfüllen.

Die Fundamentalmatrix F beschreibt das geometrische Verhältnis der Aufnahmeorientierungen der Kamera bis auf Perspektive und Skalierung. Gesucht ist jedoch die Änderung der Orientierung der Kamera, so dass eine Abbildung im dreidimensionalen Raum benötigt wird. Dazu wird im Schritt S4 die essentielle Matrix E als

$$E = K^T \, F \, K$$

bestimmt. Damit werden also die Projektionseigenschaften der Kamera, mithin die intrinsische Kalibrierung 3, berücksichtigt.

Hieraus werden nun in einem Schritt S5 durch eine Singulärwertzerlegung von E vier mögliche Kameramatrizen $P_j$ bestimmt, also eine Abbildung in homogenen Koordinaten, die angibt, wie ein bestimmter Punkt im dreidimensionalen Raum im zweidimensionalen Bild letztlich Niederschlag findet. Dabei wird davon ausgegangen, dass sich die Kamera zum Zeitpunkt der Aufnahme des ersten Bildes im Ursprung befindet, so dass sich vier mögliche Kameramatrizen für den Zeitpunkt der Aufnahme des zweiten Bildes ergeben, die dann neben den Projektionseigenschaften der Kamera und einer hier nur richtungsmäßig bestimmbaren Translation auch sehr genau die Rotation der Kamera enthalten (in vier Dimensionen - also in homogenen Koordinaten- können eine Rotation und eine Translation mit einer einzigen 4 x 4-Matrix dargestellt werden).

Im Schritt S6 soll nun durch einen Mehrpunktetest die korrekte der vier Kameramatrizen $P_j$ bestimmt werden. Dabei wird die 3D-Rekonstruktion von mehreren Orientierungspunkten bis auf eine Skalierung berechnet und überprüft, ob die Punkte - wie es sein müsste - vor der Kamera liegen. Man wählt hier mehrere Punkte, damit ein Messfehler oder dergleichen keine Fehlentscheidung zur Folge hat.

Die Rotationsmatrix, die in der korrekten Kameramatrix enthalten ist, gibt folglich an, wie groß die Änderungen des Nickwinkels, des Rollwinkels und des Gierwinkels sind, welche Änderungen als Zielgrößen im Schritt S7 bestimmt werden.

Die so bestimmten Winkel können auf verschiedene Weise im Kraftfahrzeug genutzt werden, sei es zur Bildvorverarbeitung, für Fahrerassistenzsysteme oder zur Fahrwerksregelung. Besonders vorteilhaft ist das erfindungsgemäße Verfahren jedoch einsetzbar, wenn aus den Bildern der Kamera auch Informationen für eine kontaktanaloge Darstellung an einem Head-Up-Display ermittelt werden. Dann können zusätzlich zu diesen Informationen mit dem erfindungsgemäßen Verfahren die Winkeländerungen ermittelt werden und unmittelbar zur Anpassung/Nachführung der kontaktanalogen Darstellung genutzt werden. Es ergibt sich dadurch eine hochaktuelle und genaue kontaktanaloge Darstellung, da die Veränderung der Lage des Kraftfahrzeugs zeitnah und genau aus denselben Bildern ermittelt werden kann.

Fig. 3 zeigt schließlich schematisch ein Kraftfahrzeug 4 mit einer Recheneinrichtung 5, die zur Durchführung des erfindungsgemäßen Verfahrens ausgebildet ist. Bilder einer Kamera 6 werden an die Recheneinrichtung 5 übertragen, welche daraus die die Änderung der Lage des Kraftfahrzeugs beschreibenden Zielgrößen ermittelt, welche dann beispielsweise über einen bei 7 angedeuteten CAN-Bus an weitere Fahrzeugsysteme 8, insbesondere ein Head-Up-Display, übergeben werden können.

**Patentansprüche**

1. Verfahren zur automatischen Bestimmung wenigstens einer die Änderung der Lage eines Kraftfahrzeugs beschreibenden Zielgröße, insbesondere der Änderung des Nickwinkels und/oder des Rollwinkels und/oder des Gierwinkels,
   wobei die Zielgröße aus einer aus wenigstens zwei zeitlich aufeinander folgenden, von einer in einer festen Lagebeziehung mit dem Kraftfahrzeug stehenden Bildaufnahmeeinrichtung, insbesondere einer Monokamera, aufgenommenen Bildern ermittelten perspektivischen Verschiebung markanter Orientierungspunkte ermittelt wird und wobei aus der perspektivischen Verschiebung eine die Rotation der Bildaufnahmeeinrichtung zwischen der Aufnahme der beiden Bilder beschreibende Rotationsmatrix und daraus die Zielgröße ermittelt werden, **dadurch gekennzeichnet,**
   **dass** zur Ermittlung der Rotationsmatrix

   - eine die perspektivische Verschiebung beschreibende Fundamental-matrix, insbesondere mittels eines Acht-Punkte-Algorithmus, ermittelt wird,
   - unter Berücksichtigung der als Eingangsgrößen zur Verfügung gestellten, die Abbildungseigenschaften der Bildaufnahmeeinrichtung beschreibenden intrinsischen Kalibrierung eine essentielle Matrix ermittelt wird,
   - durch Singulärwertzerlegung aus der essentiellen Matrix vier mögliche, eine mögliche Rotation der Bildaufnahmeeinrichtung zwischen der Aufnahme der beiden Bilder umfassende Kameramatrizen bestimmt werden,
   - zur Ermittlung der korrekten Kameramatrix für wenigstens einen Orientierungspunkt, insbesondere mehrere Orientierungspunkte, die 3D-Rekonstruktion ermittelt und überprüft wird, ob der rekonstruierte Punkt vor der Bildaufnahmeeinrichtung liegt,
   - aus der korrekten Kameramatrix die Rotationsmatrix ermittelt wird, wobei, insbesondere unter Anwendung eines RANSAC-Algorithmus, mehrere Fundamentalmatrizen aus verschiedenen Untermengen der Orientierungspunkte ermittelt werden und eine optimale Fundamentalmatrix durch Überprüfung jeder Fundamentalmatrix an anderen Orientierungspunkten ermittelt wird.

2. Verfahren nach Anspruch 1, **dadurch gekenn-**

**zeichnet, dass** wenigstens zwei zeitlich unmittelbar aufeinander folgende Bilder verwendet werden.

3. Verfahren nach Anspruch 1 oder 2, **dadurch gekennzeichnet, dass** 1000 bis 2000 Orientierungspunkte bestimmt werden.

4. Verfahren nach einem der vorangehenden Ansprüche, **dadurch gekennzeichnet, dass** die Orientierungspunkte in dem ersten Bild über einen SIFT-Algorithmus und/oder einen Eckendetektionsalgorithmus, insbesondere einen FAST-Algorithmus, ermittelt werden.

5. Verfahren nach einem der vorangehenden Ansprüche, **dadurch gekennzeichnet, dass** Korrespondenzpunkte zu den im ersten Bild bestimmten Orientierungspunkten in dem zweiten Bild insbesondere mittels der Lukas-Kanade-Methode und/oder der Horn-Schunck-Methode und/oder dem SIFT-Algorithmus ermittelt werden.

6. Verfahren nach einem der vorangehenden Ansprüche, **dadurch gekennzeichnet, dass** die ermittelte Zielgröße zur Anpassung einer Anzeige, insbesondere einer kontaktanalogen Darstellung eines Head-Up-Displays, verwendet wird.

7. Verfahren nach Anspruch 6, **dadurch gekennzeichnet, dass** die in der Anzeige, insbesondere der Darstellung, dargestellten Informationen wenigstens teilweise aus Bildern der Bildaufnahmeeinrichtung ermittelt wird.

8. Verfahren nach einem der vorangehenden Ansprüche, **dadurch gekennzeichnet, dass** die ermittelte Zielgröße zur Fahrwerksregelung und/oder zur Bildvorverarbeitung und/oder von einem Fahrerassistenz-system verwendet wird.

**Claims**

1. Method for automatically determining at least one target variable describing a change in the position of a motor vehicle, particularly a change in the pitch angle and/or the roll angle and/or the yaw angle, the target variable being determined from a perspective shift of distinctive reference points identified from at least two images captured successively in time by an image capture device, particularly a mono-camera, in a fixed positional relationship with the motor vehicle, and wherein a rotation matrix which describes the rotation of the image capture device between the capture of the two images is determined from the perspective shift, and from this the target variable is determined,
   **characterised in that**

in order to determine the rotation matrix

- a fundamental matrix that describes the perspective shift, particularly by means of an eight-point algorithm, is identified,
- taking account of the intrinsic calibration which is provided as input variables and which describes the imaging properties of the image capture device, an essential matrix is identified,
- by singular-value decomposition from the essential matrix, four possible camera matrices are identified which encompass a possible rotation of the image capture device between the capture of the two images,
- in order to determine the correct camera matrix for at least one reference point, particularly a plurality of reference points, the 3D reconstruction is obtained and checked to ascertain whether the reconstructed point is located in front of the image capture device,
- from the correct camera matrix, the rotation matrix is determined, while, using a RANSAC algorithm, in particular, a plurality of fundamental matrices are determined from different subsets of the reference points, and an optimal fundamental matrix is identified by checking each fundamental matrix at other reference points.

2. Method according to claim 1, **characterised in that** at least two images taken directly one after the other are used.

3. Method according to claim 1 or 2, **characterised in that** 1000 to 2000 reference points are determined.

4. Method according to one of the preceding claims, **characterised in that** the reference points in the first image are determined using a SIFT algorithm and/or a corner detection algorithm, particularly a FAST algorithm.

5. Method according to one of the preceding claims, **characterised in that** points of correspondence to the reference points determined in the first image are identified in the second image, particularly using the Lukas-Kanade method and/or the Horn-Schunck method and/or the SIFT algorithm.

6. Method according to one of the preceding claims, **characterised in that** the target variable determined is used to adapt a display, particularly a contactanalogous representation in a head-up display.

7. Method according to claim 6, **characterised in that** the information shown in the display, particularly the representation, is at least partly determined from images from the image capture device.

8. Method according to one of the preceding claims, **characterised in that** the target variable obtained is used to adjust the chassis and/or to carry out image pre-processing and/or is used by a driver assistance system.

**Revendications**

1. Procédé de détermination automatique d'au moins une grandeur cible décrivant la modification de la position d'un véhicule automobile, en particulier de la modification de l'angle de tangage et/ou de l'angle de roulis et/ou de l'angle de lacet,
la grandeur cible étant déterminée à partir d'un déplacement en perspective, déterminé à partir d'au moins deux images successives temporellement, prises par un dispositif de prise d'image se trouvant dans un rapport de position fixe avec le véhicule automobile, en particulier une monocaméra, de points d'orientation marquants, et, à partir du déplacement en perspective, une matrice de rotation décrivant la rotation du dispositif de prise d'image entre la prise des deux images et à partir de celle-ci la grandeur cible étant déterminées,
**caractérisé en ce que**, pour la détermination de la matrice de rotation,

- une matrice fondamentale décrivant le déplacement en perspective est déterminée en particulier à l'aide d'un algorithme à huit points,
- une matrice essentielle est déterminée en tenant compte du calibrage intrinsèque décrivant les propriétés de représentation du dispositif de prise d'image, mis à disposition comme grandeurs d'entrée,
- quatre matrices de caméra possibles comportant une possible rotation du dispositif de prise d'image entre la prise des deux images étant déterminées par décomposition en valeurs singulières de la matrice essentielle,
- pour la détermination de la matrice de caméra correcte pour au moins un point d'orientation, en particulier plusieurs points d'orientation, la reconstruction 3D est déterminée et il est vérifié si le point reconstruit se trouve devant le dispositif de prise d'image,
- la matrice de rotation est déterminée à partir de la matrice de caméra correcte, en particulier en utilisant un algorithme RANSAC, plusieurs matrices fondamentales étant déterminées à partir de différents sous-ensembles de points d'orientation et une matrice fondamentale optimale étant déterminée par vérification de chaque matrice fondamentale au niveau d'autres points d'orientation.

2. Procédé selon la revendication 1, **caractérisé en ce**

**qu'**au moins deux images successives directement temporellement sont utilisées.

3. Procédé selon la revendication 1 ou 2, **caractérisé en ce que** 1000 à 2000 points d'orientation sont déterminés.

4. Procédé selon l'une quelconque des revendications précédentes, **caractérisé en ce que** les points d'orientation sont déterminés dans la première image par un algorithme SIFT et/ou un algorithme de détection d'angle, en particulier un algorithme FAST.

5. Procédé selon l'une quelconque des revendications précédentes, **caractérisé en ce que** des points de correspondance avec les points d'orientation déterminés dans la première image sont déterminés dans la seconde image en particulier à l'aide de la méthode de Lucas et Kanade et/ou la méthode de Horn et Schunck et/ou l'algorithme SIFT.

6. Procédé selon l'une quelconque des revendications précédentes, **caractérisé en ce que** la grandeur cible déterminée est utilisée pour l'adaptation d'un affichage, en particulier d'une représentation par contact analogique d'un affichage tête haute.

7. Procédé selon la revendication 6, **caractérisé en ce que** les informations représentées dans l'affichage, en particulier dans la représentation, sont déterminées au moins en partie à partir d'images du dispositif de prise d'image.

8. Procédé selon l'une quelconque des revendications précédentes, **caractérisé en ce que** la grandeur cible déterminée est utilisée pour la régulation du châssis et/ou pour le prétraitement d'image et/ou par un système d'assistance au conducteur.

FIG. 1

**FIG. 2**

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006002322 A
- US 20040179104 A

- DE 102004057947

**In der Beschreibung aufgeführte Nicht-Patentliteratur**

- **EDWARD ROSTEN ; TOM DRUMMOND.** Machine learning for high-speed corner detection. *European Conference on Computer Vision,* 2006, 430-443